(19) Europäisches Patentamt
European Patent Office
Office européen des brevets

(11) **EP 3 100 413 B1**

(12) **EUROPEAN PATENT SPECIFICATION**

(45) Date of publication and mention
of the grant of the patent:
**16.05.2018 Bulletin 2018/20**

(51) Int Cl.:
**H04L 12/26** *(2006.01)*

(21) Application number: **15701209.7**

(22) Date of filing: **26.01.2015**

(86) International application number:
**PCT/EP2015/051444**

(87) International publication number:
**WO 2015/110620 (30.07.2015 Gazette 2015/30)**

(54) **RELIABLE NETWORK PROBING SESSION**

SONDIERUNGSSITZUNG EINES VERLÄSSLICHEN NETZWERKES

SESSION D'EXPLORATION DE RÉSEAU FIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2014 EP 14152639**

(43) Date of publication of application:
**07.12.2016 Bulletin 2016/49**

(73) Proprietors:
• **Koninklijke KPN N.V.**
**2516 CK The Hague (NL)**
• **Nederlandse Organisatie voor toegepast-natuurwetenschappelijk onderzoek TNO**
**2595 DA 's-Gravenhage (NL)**

(72) Inventors:
• **STOKKING, Hans Maarten**
**NL-2292 CH Wateringen (NL)**
• **DEN HARTOG, Frank**
**NL-2381 LX Zoeterwoude (NL)**

(74) Representative: **Wuyts, Koenraad Maria**
**Koninklijke KPN N.V.**
**Intellectual Property Group**
**P.O. Box 95321**
**2509 CH Den Haag (NL)**

(56) References cited:
**EP-A1- 2 276 202     US-A1- 2007 242 616**

• **ARCHI DELPHINANTO ET AL: "End-to-end available bandwidth probing in heterogeneous IP home networks", CONSUMER COMMUNICATIONS AND NETWORKING CONFERENCE (CCNC), 2011 IEEE, IEEE, 9 January 2011 (2011-01-09), pages 431-435, XP031865954, DOI: 10.1109/CCNC.2011.5766506 ISBN: 978-1-4244-8789-9 cited in the application**
• **CESAR MARCONDES ET AL: "Exploring Embedded Path Capacity Estimation in TCP Receiver", END-TO-END MONITORING TECHNIQUES AND SERVICES, 2007. E2EMON '07. WORKSHOP ON, IEEE, PI, 30 May 2007 (2007-05-30), pages 1-8, XP031183490, ISBN: 978-1-4244-1289-1**
• **MARCONDES C ET AL: "PathCrawler: Automatic harvesting web infra-structure", NETWORK OPERATIONS AND MANAGEMENT SYMPOSIUM, 2008. NOMS 2008. IEEE, IEEE, PISCATAWAY, NJ, USA, 7 April 2008 (2008-04-07), pages 339-346, XP031290537, ISBN: 978-1-4244-2065-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a method of measuring capacity on a route in a network configured to carry reliable packet traffic, and further relates to a network node on a network configured to carry reliable packet traffic, a gateway device and a program to probe a route in a network configured to carry reliable packet traffic.

BACKGROUND

Methods of capacity and available bandwidth probing are known to the skilled person and are useful in probing networks to identify potential and available network resources. A method of probing is described in "End-to-end available bandwidth probing in heterogeneous IP home networks", Consumer Communications and Networking Conference (CCNC), 2011 IEEE , vol., no., pp.431-435, 9-12 Jan. 2011, by A. Delphinanto, T. Koonen, F. den Hartog; in Delphinanto, A.; Koonen, T.; den Hartog, F.; also in "Real-time probing of available bandwidth in home networks" Communications Magazine, IEEE , vol.49, no.6, pp.134-140, June 2011 by A. Delphinanto, T. Koonen, F. den Hartog; and further in EP 2276202.
These three documents describe a method in which capacity can be derived from the dispersion between two probe packets. The method is an example of a Probe Gap Method (PGM) and has 2 features that differentiate it from other probing tools. It uses the minimum round trip times (RTTs) of two back-to-back probes to determine packet dispersion, and further can use a single size probe and a double-size second probe separately to circumvent contention problems, in particular Wifi contention problems. As a method it is particularly suitable for networks which utilize wireless access, although it can also be used on non-wireless networks. When the size of the probes is correctly calculated the second probe becomes fragmented and this overcomes contention problems.
The method as described is a sender-only, active probing method, working from one side, sending ping (ICMP) requests or UDP packets and receiving back ping replies or UDP error messages. In its minimum working the method includes transmitting two equally-sized probing packets with packet size L back-to-back on a network route, meaning they are put on the 'wire', as it is sometimes referred to, as a continuous stream of data. The round-trip-time (RTT) of the first packet (RTT1) and the second packet (RTT2) is determined. This probe is repeated a number of times to counter the deleterious effects of cross-traffic, and the capacity is determined by dividing packet size L by (minimum RTT2 - minimum RTT1). By subtracting the two minima, we are actually determining the dispersion between the two probes.
As an alternative two separate probes can be transmitted, a first probe with size L and a second probe with size 2L. Again the minimum RTT of both is calculated and capacity derived from packets size L and (minimum RTT2 - minimum RTT1).
For both methods typically the size of probe L will be roughly equivalent to the value of maximum transmission unit (MTU) of the network path being probed.
As an active method of probing this method has disadvantages, not least that in creating and transmitting probe packets onto a network the traffic load of the network thereby increases. One effect of this is that available bandwidth, if this is being measured, automatically decreases by virtue of the probing designed to quantify it, but there is also increase in queuing times for network traffic and congestion due to cross-traffic is likely to increase.
Further one problem with this method is that it cannot probe towards, or to, firewalled devices, or receivers.
A home, or domestic, network is a typically small network of devices situated in a domestic environment and connected together to allow transfer of data. Typically the devices are likely to include a mixture of computers and computing devices, such as tablets, but also set-top boxes, networked televisions, networked hand held devices and also mobile communication devices, such as mobile phones, which may temporarily attach to the network. A domestic network is coupled to further networks, for example the internet, other dedicated networks and service providers via a gateway device, sometimes called a home gateway.
Many devices in home networks incorporate firewalls and typically a firewall acts as a barrier to probe traffic and therefore a firewalled device will either not receive data packets unless they are in reply to a packet already sent out or, if unknown incoming packets are received, will not respond to them. In other words, firewalled devices block uninvited data. This means that probing a home, or domestic, network is problematic because it is typically not possible to simply transmit probes towards a networked device and receive replies in return. Even if the home gateway itself is performing the probe method it is still faced with the same problem of how to get probes to and from each device along the network paths in its own network. While these paths go through an unknown home network, containing the various types of network equipment as terminals, the probing method described requires a terminal to send replies to packets, which in a home network will be either ICMP replies or ICMP error packets because an UDP port is not in use. But, a terminal running a stealth firewall does not send any reply packets. A stealth firewall is a firewall which may receive packets from the outside but will not respond to them at all, not even with error packets. In that case no measurements can be performed of the path to that terminal.
As is known by the skilled person, efforts have been made to probe networks passively. One such method is described in Cesar Marcondes, et all, "TCP Probe: A TCP with built-in Path Capacity Estimation", The 8th IEEE Global Internet Symposium (in conjunction with IEEE Infocom'05), Miami, USA, April. 2005, in which TCP packets are used to derive capacity and available bandwidth of a network path.

As will be known by the skilled person reliable packet transport mechanisms exist in which data is sent or transmitted in packets and receipt generates some form of acknowledgement.

As is known by the skilled person there are various reliable packet protocols and TCP is one such reliable transport protocol on IP in which TCP packets are acknowledged by receivers with ACK packets, thus creating a natural flow of sent packets travelling in one direction in a network and response packets travelling back in the opposite direction. There are various extensions on TCP ACKs: fast retransmission, delayed ACKs, selective ACKs (SACKs). Another example of a reliable transport protocol is Stream Control Transmission Protocol (SCTP, IETF RFC 4960).

Further it is known that capacity or bandwidth measurements of a network path can be performed using packet dispersion of TCP packets which are sent actively into the network. The method calculates dispersion based on derived knowledge of TCP round-trip-times (RTT).

For data sent in TCP packets from a sender to a receiver an acknowledgement, or ACK, is sent by the receiver back to the sender and the TCP RTT is defined as the time it takes for a data packet to be acknowledged. Since packets can be lost and then retransmitted, and since not all ACKs are sent instantaneously upon receipt of the data packet, this TCP RTT is not necessarily identical to the RTT in a ping request/reply. Additionally, TCP RTT is normally obtained by a data sender and based on this the data sender has a view on the network and can determine the rate at which it can send packets. This rate is managed by a so-called congestion window (cwnd). For example, a sender may send 10 TCP packets on the line, or network route, and then wait for packets to be acknowledged. When after sending 10 packets the sender receives an ACK for the first packet then the sender can send another packet onto the network route if the congestion window, or cwnd, is 10. The cwnd size is determined based on TCP RTT, which is an indication of congestion in the network.

However this is still an active probing method and even though the amount of packets sent may be low, the method still remains intrusive. Further to this the method will not work well in a wireless setting due to contention. Additionally the described method will have a long lead time before a good capacity estimate can be derived because it may take a long time before getting a good sample in which ACKs are sent instantly upon receipt of the original TCP packets and in which the packet-pair probe does not encounter any cross traffic.

Another effort of probing networks passively has been described in Cesar Marcondes, et al, "Exploring Embedded Path Capacity Estimation in TCP Receiver", END-TO-END MONITORING TECHNIQUES AND SERVICES, 2007. E2EMON '07. WORKSHOP ON, IEEE, PI, 30 May 2007, ISBN: 978-1-4244-1289-1. This method describes embedding patch capacity estimation into applications without sending probes while receiving useful data. It uses the Slow Start phase of TCP, in which every acknowledgement from a TCP receiver triggers the transmission of a packet pair "back-to-back" from the sender. RTT's for these packets are measured in the TCP receiver and then capacity is estimated.

While capacity and bandwidth measurements are possible none offer solutions to accurate measurement in all networks efficiently.

SUMMARY

According to one aspect of the present invention, a method is described of measuring capacity on a route in a network configured to carry reliable packet traffic according to appended claim 1. Additionally according to a second aspect of the present invention a network node is described in appended claim 6 and according to a third aspect a program is described in appended claim 9. The method is a passive probing method involving listening in to transmitted reliable packet traffic to identify packet sets, in other words sets of packets and acknowledgements to these packet and then using these sets to calculate capacity. In order to use the method suitable packet sets are identified and matched. The method requires at least two sets of suitable packets and using these several embodiments of probing become available for use. Each suitable packet set includes at least one first packet travelling in one direction on the route and at least one second packet travelling on the network route in the opposite, or reverse, direction.

The method involves listening in, or monitoring, reliable packet traffic on a network route and is therefore typically performed at a network node somewhere on, or along, the network route. The packets identified in the method are transmitted, in other words initially transmitted, or sent, by other devices. Once suitable packets have been identified times are registered for them. Preferably the times registered will correspond closely to measurable times at which the packets are identified by the device performing the method on the network route. In practice strict accuracy may not be possible and some delay will occur between the time at which a packet is received and identified by the node and the measurement or registering of time. It is sufficient if packet times are registered with similar, the same or equivalent delays between receiving and identifying each packet and registering a time for that packet. Examples of registered times are packet reception time and packet transmission time. Once sets are matched and have registered times the capacity of the route can be calculated and is dependent on packet size and registered times for the at least two sets.

In order to identify and match suitable sets the device performing the method has access to criteria by which appropriate sets can be identified. These criteria may be pre-installed into the device or downloaded from a suitable repository, for example a server connected to the internet. As sets include packets travelling in both directions it is unlikely that suitable sets of packets will be identified instantaneously and typically packets will be identified, registered and details of them saved in the event that a corresponding packet or packets to make up the set will be detected, allowing a match to be made. If a corresponding suitable packet or corresponding packets is then detected the packets can be matched to a set. Typically packet data may be identified and registered as they are received through the node before they are suitably matched, if they are matched at all. Information on any unmatched packets may be discarded after a suitable time, for example a time after which it would be highly unlikely that a match would be found.

Matching suitable packets can be achieved using a variety of methods once it is known which criteria, or which embodiment of probing, is to be used and a number of technical measures need to be taken to perform this matching. Examples of such measures include finding the right sequences of packets to use for measurement, delaying packets, fragmenting packets, sending dummy data traffic and manipulating headers which in the case when the reliable packet protocol is the TCP protocol will mean manipulating the TCP headers. These can be undertaken by the device performing the method. Delaying packets may for example cause packets to become back-to-back and this allows the device to create conditions whereby a probe can be made by causing two packets of, for example, the same size, to be sent on along the route to their destination in a manner, in other words back-to-back, that allows their respective reply packets to be used to complete a measurement of dispersion. In this case the time registered for the packet which is held up, or delayed, is the time which is representative of the time at which it leaves to continue its journey to the destination point. Fragmenting packets may for example cause packets to be of certain size suitable for probing, and again allows the device performing the method to create the conditions under which dispersion can be measured using existing traffic. In an alternative the device may send dummy traffic and this may for example also cause the right size of data to be sent which is suitable for probing. In an embodiment of this the device may send dummy traffic for example when a sets of packets cannot be found or identified. In this instance, instead of for example using a first suitable packet, the device finds a suitable single existing packet as first packet of the first set and creates a dummy packet of the correct size, and ensures that the dummy packet as first packet of the second set is transmitted onto the route back to back with the ongoing existing first packet of the first set.

In other words, the method involves listening in on an existing reliable packet session and using existing reliable packet traffic to provide the probe packets from which capacity can be derived. The device performing the method looks for packets which conform to requirements allowing calculation of capacity.

In a particularly useful embodiment one packet of a set of at least one first and at least one second packets is a response packet, which may be an acknowledgement or a data packet sent in response to an acknowledgement. In the case where the reliable packet protocol is the TCP protocol an acknowledgement will typically be an ACK. In a particular version of this the second packet is a response to the first and this assists in identifying the packets. Alternatively the first packet could be a response to a previously sent reliable data packet and the second packet is a packet transmitted in response to the first packet. In another alternative both packets may include a response and additionally data.

Generally matching a response to a reliable packet, or in the TCP embodiment, matching an ACK to a respective TCP data packet, is relatively simple as that is the purpose of the ACK. In the case of TCP the original TCP sender device also performs a matching between sent TCP packets and received ACKs in order to verify that data has been received at the receiving device. If it finds that a sent packet had not produced a corresponding received ACK then that packet is resent. Therefore in one simple method of matching, utilizing the TCP protocol, the device performing the method simply reads TCP headers in packets travelling in one direction on the network route and headers in ACKs travelling in the opposite direction and matches the relevant packets to their corresponding ACKs according to known TCP header numbering sequences.

In a particularly advantageous embodiment the reliable packet traffic is TCP traffic, which is a known and widely supported protocol likely to be found on many networks, however any reliable packet protocol used for communication in a network can also be utilised in the invention.

Matching a data packet sent in response to an acknowledgement is more difficult but there are several methods for doing so. For the TCP embodiment several methods for matching a data packet sent in response of an ACK are available.

A first method involves analysing an entire TCP session. Since the sender's TCP congestion window size depends on how the TCP session progresses, analysing all packets and acknowledgements in a session allows inference of a sender's congestion window. Knowing the congestion window size allows the device performing the method to derive or calculate which data, or packet, is sent in response to which acknowledgement. This method does depend on the exact TCP congestion control algorithm, for example Tahoe, Reno or NewReno as is known in the art, used by the sender. This TCP flavour can again be identified by analysing the packets, as is known in the art.

A second method leverages the TCP timestamp option. This embodiment involves adding two further headers to the existing TCP header, a timestamp value and a timestamp echo reply. The possibility to do this is not supported by all TCP implementations but is relatively common. Using the TCP timestamp option, a network node or other device performing the method echo's the most recently received timestamp. Thus, the data sent in a response to an acknowledgement will echo the timestamp value contained in the TCP header of the data packet, thus allowing the device to associate the data with the acknowledgement. Timestamps may be available in the packets already, or timestamps may be inserted by the network node performing the probing. Inserting timestamps at the network node however potentially increases complexity of the method, as this increases the TCP packet size and may thus require recalculation of CRC checksums and possibly recalculation of other items depending on packet size.

A third method involves analysing the similarity in arriving time of acknowledgement packets and data packets. As data packets are often sent in a burst pattern, this causes the corresponding ACKS, the acknowledgements to those packets, to follow roughly the same burst pattern. By using a cross correlation function a device performing the method can identify the extent of similarity and seek the most likely correspondence, and thus link data packets to acknowledgements.

Once matched, packet sets can be used to calculate capacity on the link and there are several embodiments by which the general method can be used for probing.

In a particular embodiment the reliable traffic, for instance TCP traffic, is monitored for packets that match the following criteria. Two packets of equal size transmitted back-to-back in a first direction on the route, and replies sent to those packets in a second direction on the route. In this embodiment packet size L is the size of either of the two equally sized probe packets.

This embodiment uses inter alia a Probe Gap Method (PGM) to calculate capacity. The device performing the method watches out for two packets of equal size which are transmitted back-to-back, in other words the one immediately following the other with very little or substantially no open line or unused signal time between them, in one direction on the network route. The device also watches out, or listens in, for the replies to these two packets sent in the other direction on the same route. Once all four packets, the two original back-to-back packets plus the two corresponding acknowledgement packets have been identified and registered their times can be matched to provide a measure of capacity of the route.

Capacity can, for example, be calculated from:

$$C = L / D$$

where

C = capacity
L = the size of either of the two packets of equal size
D = dispersion on the route

Dispersion is typically measured from:

$$D = RTT_2 - RTT_1$$

where:

$RTT_2$ = round trip time of the second packet set as measured from the device
$RTT_1$ = round trip time of the first packet set as measured from the device

Because the device performing the method is not the original sender the round trip times are not full RTTs in the sense of the prior art. Instead, they represent the time it takes for a packet to travel from the device to the ultimate destination of the packet in the network coupled with, or added to, the time it takes the reply packet to travel from the destination, back along the network route and be received by the device. This is why the times of suitable packets and acknowledgement packets are registered at the device. In effect the time registration allows a measure of the round trip of a packet set from the device, to destination and back to device again. Also note, since the first packet of the first set sent also delays the first packet of the second set by its very travel time, the RTT of the first packet of the second set should be calculated from the start of sending of the first packet of the first set.

This difference in round trip time as referenced to the device allows a measure of dispersion of the packets on the route and ultimately allows capacity on the route to be measured.

The capacity as measured will be the capacity of the route as defined from the device performing the method, to the terminal in the network which acts as destination for the packet, and back to the device again. As is known by the skilled person, probe gap methods will measure capacity from the dispersion on the bottleneck link, as this bottleneck link will in fact be the cause of the size of the ultimate dispersion. The bottleneck link is the limiting influence on the capacity of the route; so in essence, this allows measurement of the capacity of the route. Further, multiple measurements may be taken so that the minimum value of dispersion can be determined to calculate capacity. Also and alternatively, the other side of the network can also be probed if, in this case, the destination terminal becomes the sender and the sender becomes the destination.

In an alternative embodiment the reliable traffic, for example TCP traffic, is monitored for packets that match the following criteria. Firstly a first packet of a first set is identified and then either a first packet of a second set, where the first packet is substantially double the size of the first packet of the first set, or, two first packets of a second set each substantially the same size as the first packet of the first set and where the two first packets are transmitted back-to-back. As a further alternative embodiment a dummy packet could be created to perform the task of, for example, a first packet of the second set if no back-to-back packets of substantially the same size are detected on the network route. Further, response packets are identified which are sent to packets fulfilling the first criterion. The size of the first packet of the first set is defined as L.

In this embodiment capacity can again, for example, be calculated from:

$$C = L / D$$

where

C = capacity
L = the size of the first packet of the first set
D = dispersion on the route

Dispersion is typically measured from:

$$D = RTT_2 - RTT_1$$

where:

$RTT_1$ = round trip time of the first packet set as measured from the device

$RTT_2$ = round trip time of the second packet set as measured from the device, the second packet set including either a first packet substantially double the size of the first packet of the first set, or, two first packets each substantially the same size as the first packet of the first set and where the two first packets are transmitted back-to-back. Since the first packet of the first set sent also delays the first packet of the second set by its very travel time, the RTT of the first packet of the second set should be calculated from the start of sending of the first packet of the first set.

This particular embodiment has the advantage that it may avoid contention in the event that the network includes wireless elements or some form of wireless transmission of data. Normally the response packet for the first packet of the first set may contend with the transmission of the first packet of the second set. Using a double-sized packet avoids this problem, or selecting two packets back-to-back of which the first will not receive a reply will also avoid the contention problem.

In another embodiment, an acknowledgement of a packet, or, in the TCP embodiment an ACK to a TCP packet, will lead to the sending of new packets,. If a certain ACK leads to the sending of two TCP packets in the other direction, this will also allow capacity of the route to be calculated. If the sender of the TCP packets will have multiple packets in the queue, they will normally be transmitted back-to-back. If a receiving node, in this case a network node on, or along the network route between sender and ultimate receiver, receives such TCP packets, it can detect the dispersion between those packets immediately. Any dispersion between these packets is due to the network characteristics in between sending node and network node. Note that for this, the round trip times do not need to be determined. Normally, the round trips times are determined to be able to determine the dispersion, but in this embodiment the dispersion is immediately derivable.

In order to minimise the effect of cross traffic the following embodiment is useful. A plurality of packets are identified and matched times are registered. Capacity is calculated from the minimum difference in registered times for matched packets. In other words, whichever embodiment is used to probe the method is repeated several times, using several sets of suitable data packets and capacity calculated using the best possible times, in terms of being those times which indicate the shortest round trip times from the device to destination terminal and back again. Alternatively, not the minimum but the average of a number of probes can be used. Using this method the available bandwidth rather than the capacity of the route is measured. This is because the effect of other traffic, which is causing part of the capacity to no longer be available, is part of the measurement. Note that of course only an indication of the current available bandwidth is measured, as available bandwidth may continuously change and thus can change immediately after performing any measurements.

The reason for doing the probe multiple times and taking the minimum RTTs, is that other traffic on the network route, often known as crossing traffic, can delay any packet. Cross traffic can delay any packet sent or any reply sent. Therefore any one set of registered times from an identified packet set may not be representative of the ideal round trip time possible on the network route. Either or all of the data packets may have been delayed. By repeating measurements, that is by identifying more than one set of data packets for any one measurement, and by taking the minimum RTT, results are determined which represent round trip times when no part of the probe has been delayed, assuming that crossing traffic is stochastic. In other words, if the crossing traffic is dynamic in nature, instead of continuous, and if probe packets are sent a number of times, there is a good chance that the probe packets do not encounter any cross traffic at least once. The minimum RTTs therefore represent ideal conditions on the network route. Alternatively, if there is no other network traffic then the probe can be performed only once to yield an informative result.

The method is advantageously performed at a network node on a network. This is because the method involves listening in to reliable traffic. The method is therefore not performed at a sender but at a device part way along a network route and configured to transmit, or send on, reliable traffic. The network node is configured to identify and match at least two sets of at least one first and at least one second packets transmitted on the route, where the at least one first packet is transmitted in a first direction and the at least one second packet is transmitted on the route in a second direction, the first direction being the reverse direction to the second direction, and further configured to register times for the at least two sets, and further configured to calculate capacity of the route dependent on packet size and registered times for the at least two sets.

In other words the probing node is not generating the probing traffic, or probes, but is instead probing by using existent traffic, in other words traffic which already exists.

The network node is therefore equipped with sufficient processing and memory to detect packets of reliable traffic and response packets as they arrive en route to some further destination, read packet headers, store criteria for identifying packets and response packets, recognize packets and response packets, register times for identified packets and response packets, store information about packets and response packets, and further match appropriate packets and response packets and use information about them and their corresponding registered times to calculate capacity. In an advantageous embodiment, the network node is configured to carry TCP traffic as reliable packet traffic.

Alternatively, the network node may not perform the calculation of capacity itself but may provide the information allowing capacity to be calculated to a further device. In this embodiment the device performs detection and identification of packets and registers times for identified packets and preferably matches up the packets thus ensuring a minimum amount of data to be transferred out the further device.

The further device might be another device in the network itself, for example a computer connected to the network but also a mobile device or hand held computer connected in to the network, but may also be a device entirely outside the network, for example a device or server accessible through the internet.

The method is particularly suitable for use in a home, or domestic, network and in this case the network node is advantageously a gateway configured to couple the network to a further network. This has the particular advantage that the gateway can probe its own domestic network by using reliable packet traffic, for example TCP traffic coming into and out of the network from and to some external sender.

The method is advantageously performed on the network node by a program to probe a route in a network configured to carry reliable packet traffic. In this case the program is arranged to perform the steps of identifying and matching at least two sets of at least one first and at least one second packets transmitted on the route, where the at least one first packet is transmitted in a first direction and the at least one second packet is transmitted on the route in a second direction, the first direction being the reverse direction to the second direction, and registering times for the at least two sets, and calculating capacity of the route dependent on packet size and registered times for the at least two sets. It is advantageous if the program is configured to recognise and handle TCP traffic as reliable packet traffic.

The method is particular useful in the area of capacity probing and available bandwidth probing, especially in local networks such as home networks, and can be used to measure capacity or available bandwidth. Further the TCP protocol offers a useful embodiment as TCP is widely used in networks however any reliable packet protocol in which packets are sent and acknowledged, or in which packets generate the reliable return sending of predictable, detectable and identifiable packets which can be tallied up with the generating packet, can be used. Another useful embodiment is when the Stream Control Transmission Protocol (SCTP, IETF RFC 4960) is used, which is another reliable protocol. This protocol is somewhat similar to TCP. All data packets contain a Transmission Sequence Number (TSN), to permit the receiving endpoint to acknowledge the receipt of specific data packages. In this, it is comparable with the sequence number used in TCP. SCTP supports selective ACKs, in the sense that every other packet is acknowledged. Also, a congestion window is used in much the same way as TCP. Thus, the matching and identifying of packets and their responses, or matching of data packets and acknowledgement packets, is similar for SCTP as for TCP.

BRIEF DESCRIPTION OF THE DRAWINGS

Figure 1 shows a method of probing that can be used in the method of the invention.

Figure 2 describes a passive measurement point, according to the invention, between a sender of TCP traffic and a receiver.

Figure 3 shows an embodiment of the invention in which a terminal on a network route receives data.

Figure 4 shows an embodiment of the invention in which the terminal on a network route receives and sends data.

Figure 5 shows an embodiment of the invention in which the terminal on a network route sends data.

DETAILED DESCRIPTION

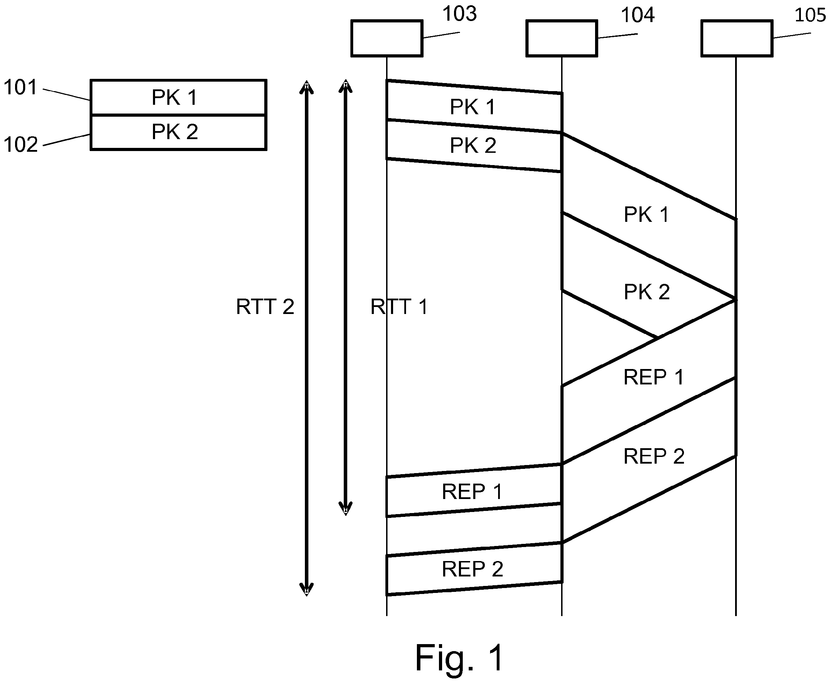

Fig. 1 shows a method of probing in which TCP packets PK1 101 and PK2 102 are transmitted on a network route which encompasses network node 103, a further network node 104 and a terminal 105 which is the destination device to which packets 101 and 102 are transmitted. Upon receipt at terminal 105 PK1 101 causes the creation of reply REP1 and PK2 102 causes the creation of reply REP2.

From the network node 103 the time for PK1 and PK2 to travel to terminal 105 added to the time for REP1 and REP2 to travel from terminal 105, via further node 104 to network node 103 is representative of the round trip time for that section of the network route.

As can be seen from Fig. 1, the link between further node 104 and terminal 105 is slower than the link between network node 103 and further node 104, and holds up all packets PK1, PK2, REP1 and REP2. This link therefore causes dispersion of the TCP packets on the network route, as shown by the difference in arrival times of REP1 and REP2 back at network node 103. However, added to this, dispersion of PK2, which follows PK1 along the route, is also caused by the time taken for PK1 to clear, or traverse, links. The round trip time for the first packet of the first set can be calculated from the time taken for PK1 to make its journey from network node 103 to terminal 105 and for REP1 to make its journey from terminal 105 to network node 103. The time taken for the first packet of the second set includes the time taken for it to make its journey from network node 103 to terminal 105 and for REP2 to make its journey from terminal 105 to network node 103, plus the time taken for PK1 to clear the first link between network node 103 and further node 104 at the start of its journey. Therefore if or when PK1, PK2, REP1 and REP2 are identified at network node 103 times for these packets are also registered, then the dispersion can be calculated from the difference in registered times for each packet and its reply, in other words for the first set PK1 and REP1 and for the second set PK2 and REP2.

Fig. 1 shows both PK1 and PK2 as being of similar or the same size, however this reasoning applies to all embodiments of the invention.

For example, for wireless networks or other networks with contention between upstream and downstream data, the measurement method is modified somewhat. Instead of sending a single probe with 2 packets back-to-back, RTT1 and RTT2 are measured separately by sending a single probe packet and double-sized probe packet, which then gets segmented in the network.

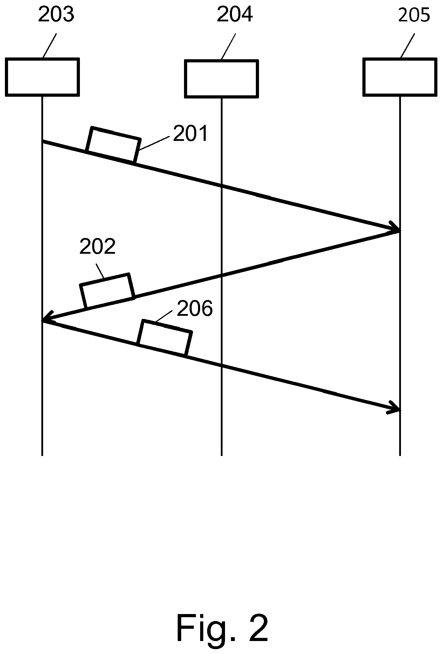

Fig. 2 describes a passive measurement point between sender of TCP traffic and a receiver coupled with typical TCP traffic. The measurement point can determine TCP RTT. The measurement node is somewhere in between sending and receiving node on some network route, or path, which connects them.

Typically TCP sessions are data rich with TCP packets causing the creation of ACKs which themselves cause the sending of further TCP packets. This is shown in Fig. 2 in which a TCP packet 201 is sent from sender 203, travels through or past network node 204 to destination terminal 205 and generates ACK 202 which then travels back from terminal 205 through network node 204 to sender 203, where it then triggers sending of a further data packet 206 which travels the same route as 201 through network node 204 to destination terminal 205.

One main problem to overcome in determining RTT on a route is matching the data packet triggered by an acknowledgement ACK to the triggering ACK. Since many data packets and ACKs are sent, these must be matched properly to determine the RTT accurately. Matching can be performed by tracking the cwnd based on the entire captured TCP session. If the precise cwnd is known then a prediction can be made as to which packet will be sent after which ACK. In an alternative method of matching the TCP timestamp option is used. Alternatively a correlation function on the data traffic and ACK pattern can be used and this works, because TCP is usually bursty in its behaviour, continually waiting for ACKs before sending new data.

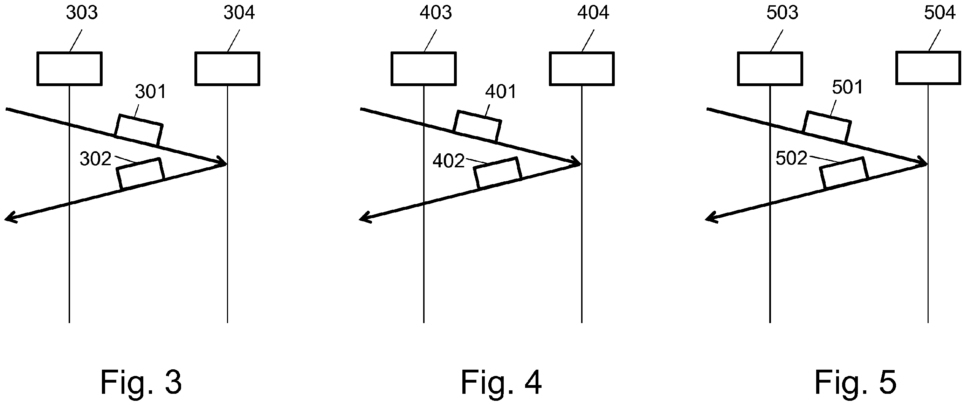

In fact there are typically three different situations in a TCP session, as are described in Figs. 3, 4 and 5.

Figure 3 shows an embodiment of the invention in which a terminal on a network route receives data. Here data 301 travels through network node 303 to terminal 304 which only receives data and sends acknowledgements. In this scenario the resulting ACK 302 is to be matched to data packet 301. This is achievable because typically an ACK contains a number referring to the packet it acknowledges. This is in the acknowledgment number' field in the TCP header. The number actually refers to the next packet it expects, or rather as is known by the skilled person, the next data octet, but that is of course based on the last packet received. In this situation, the network node 303 will be able to determine the capacity and available bandwidth in the direction to the terminal 304. The ACKs sent from the terminal back to the network node are very small in size, and the assumption in the probe gap method of probing is that these small packets will not cause any further dispersion. So only the data packets to the terminal are causing the dispersion, making this a probe method for determining the capacity or available bandwidth in the direction of the terminal. Network node 303 may be a home gateway if the network being probed is a home, or domestic, network and in the case when there is a symmetrical connection, which is mostly the case in a home network, both directions will have the same capacity.

In this embodiment, the network node or home gateway 303 can do a number of manipulations.

Network node 303 can delay packets to be sent for measurements. The minimum RTT will be measured when no other traffic, for example cross traffic, interferes with the measurement traffic. By delaying all packets to be sent for measurements just a little, the node 303 will clear the way for them. This delay need not be very large, just enough to have the queues emptied of cross traffic.

This allows only the clearing of cross traffic in one direction, as this has no control over traffic sent to terminals in the other direction. This delaying may not be needed if a regular probing method were undertaken, one in which probe traffic was generated and sent by the probing node, since both RTTs are determined with the same packets. So, any delay added before sending the first packet is not a problem, as this does not change dispersion. If RTT1 and RTT2 are measured separately, however, this does become a problem, and this delaying of probe packets becomes advantageous. This is so because less measurements are needed to find minimum RTTs, as the cross traffic in one direction is no longer an issue.

Alternatively network node 303 may fragment packets to be able to measure RTT2. Say for example node 303 forwards data packets of substantially 1500 bytes. Node 303 can fragment these packets into 2 packets of substantially 750 bytes each. As is known by the skilled person a packet that is fragmented into two smaller but equally sized packets both substantially equal to MTU must itself be slightly less than twice the MTU because while the packet payload can be split up the packet header must be duplicated because a header must be carried by each of the two smaller packets. So in the example given a 1500 packet might result, after splitting up, in two packets of around 780 bytes each. Actually, fragmenting a packet then transmitting the fragments with some spacing to measure RTT1 is an advantageous option because it ensures that L1=L2 all the time if the fragmenting results in two equal pieces.

It can send both fragments back-to-back to be able to measure RTT2. It may also send the first fragment, then wait a little as described above, then send the second fragment. In this way it can measure RTT1 based on this second fragment. Another reason for fragmenting is to avoid contention when measuring RTT2.

Note that node 303 cannot change the size of the ACK packets. Node 303 could create such tiny fragments that the size of the data packets sent becomes really small. The size of the data for example may become the same size as the size of the ACKs. This can be the case if for example selective ACKs are used, as are known in the art. Selective ACKs take up more space in the ACK packets, thus increasing their size and in that case, the embodiment of Fig. 3 becomes analogous to the embodiment of Fig. 4 for measurement purposes. Unfortunately the accuracy becomes lower because of the lower packet size of the measurement packets.

Figure 4 shows an embodiment of the invention in which the terminal on a network route receives and sends data. Here, both packets 401 and 402 comprise data and ACKs. In other words data and ACKS go in both directions between network node or home gateway 403 and terminal 404. To perform proper measurements, packets selected for probing in both directions should be of equal size.

In this embodiment node 403 can also perform fragmentation to ensure that packets are of substantially equal size, similar to the situation in the embodiment of Fig. 3, but the goal would be to match the size of the data packets sent to terminal 404 with the size of the packets coming from the terminal 404. If the data packets in both directions are of the same size and each packet is acknowledged, then an embodiment can be used in which both packets are equal. If not all packets are acknowledged, or if the data sizes in both directions are not the same, node 403 should take care in selecting only those packets which match its probing requirements.

If packets are not of equal size, the network node has two methods it can perform to modify packet sizes. For modifying the packet size of data sent by the terminal it can set the MTU, or Maximum Transfer Unit, of the network interface of the terminal. It can do this if the node is the DHCP server of the terminal. The node can then use the DHCP Interface MTU option, option code 26. For packets in the direction from the node to the terminal, the node can either use fragmentation to create specific packet sizes or it can use MTU settings in this direction as well, causing fragmentation by the default networking stack in the gateway device, or other device performing the method.

In all embodiments, and since the device performing the method is listening in to existing traffic, it is important to select the appropriate packets for the measurement. In many cases, not all TCP packets are acknowledged, this is called "delayed acknowledgements" and is more efficient on the network and requires less processing. If, for example, every other packet is acknowledged, then the device performing the measurement can use this to measure both RTT1 and RTT2. To measure RTT1, the device can use a packet that will be acknowledged. To measure RTT2, the device can be arranged to send two packets back-to-back, of which only the second packet will be acknowledged. This way, contention will be avoided when measuring RTT2.

Figure 5 shows an embodiment of the invention in which the terminal on a network route sends data. Here, ACK 501 is transmitted, passes network node or home gateway 503 on its way to terminal 504 where data 502 is generated. In other words terminal 504 sends data in response to receiving an acknowledgement. In this case, the network node or home gateway 503 is required to know what data is sent by the terminal in response to which ACK.

Here node 503 can do a lot of things to make the probing method successful. For example node 503 can increase the size of the ACK 501 sent to terminal 504 in various ways. For example terminal 504 will respond to receiving the ACK so node 503 can just send some traffic immediately before the ACK and this will in fact have the same effect as increasing the size of the ACK packet itself. This extra data can be dummy data sent to terminal 504, for example to an unused port. Note that to measure RTT1 and RTT2, different amounts of dummy data have to be used. Also note that if the terminal responds to the dummy data on an unused port with an ICMP error reply, this may create contention. But, that will not be the case for a terminal with a stealth firewall, as the terminal will not send a response in that case. Node 503 can also just insert data into the ACK packet itself. This is more complicated and incidentally when an ACK packet contains data in fact the situation becomes the embodiment described in Fig. 4. Node 503 will then have to take more actions, for example ensuring all TCP headers remain valid. Also, terminal 504 will start acknowledging the data and node 503 should remove these acknowledgements before forwarding the data because the extra information added in by node 503 is not part of the original TCP packets the TCP sender believes it has sent, therefore if the extra acknowledgements are not removed the risk is taken that the original TCP sender becomes confused. However an advantage to this embodiment is that the data sent by terminal 504 will contain ACKs for the data sent by node 503, and therefore matching the data packets to the ACKs can be done based on the numbers contained in the ACKs. This simplifies matching for node 503.

Node 503 can manipulate the ACKs sent to terminal 504. If the terminal supports fast retransmission then, as is known by the skilled person, it will respond with a retransmission of a packet if it receives three duplicate acknowledgements. Thus, by generating three duplicate acknowledgements, node 503 in effect forces the terminal to send, in other words retransmit, a specific data packet. Node 503 can do the same thing by manipulating selective ACKs, otherwise known as SACKs.

The node can induce the use of the timestamp option and by manipulating the TCP session setup it can insert the timestamp option, known as TSopt, in the initial SYN, otherwise known as the TCP session setup packet.

If the embodiments of both Fig. 4 and either Fig. 3 or Fig. 5 are performed then capacity can be determined in both directions. This is advantageous in the case of asymmetrical network links, in other words where the bandwidth in one direction is different from the bandwidth in the other direction. This may be the case in home networks. Actually, capacity can also be measured in the direction of the terminal. Often capacity is the same in either direction, in the case of symmetric links and this can occur in home networks. For symmetric links, the probing method described would give you capacity in either direction but cannot measure available bandwidth on the return path. For asymmetric links, for example an ADSL connection between DSLAM and home gateway, capacity would need to be measured in both directions, so the example described would only measure one direction of such an asymmetric link.

The description of the present invention has been presented for purposes of illustration and description, but is not intended to be exhaustive or limited to the invention in the form disclosed. Many modifications and variations will be apparent to those of ordinary skill in the art. The TCP embodiment was chosen and described in order to best explain the principles of the invention and the practical application, and to enable others of ordinary skill in the art to understand the invention for various embodiments with various modifications as are suited to the particular use contemplated.

**Claims**

1. A method of measuring capacity on a route in a network configured to carry reliable packet traffic, reliable traffic being traffic in which a response packet is sent in response to at least one transmitted packet, the method comprising:

   - identifying and matching at a network node (103) part way along the route, at least two sets, the at least two sets comprising at least a first set and a second set, wherein a set comprises at least one first (101, 102) packet and at least one second packet (REP1, REP2) transmitted on the route, one packet of the set being a response packet, wherein the at least one first packet is transmitted in a first direction and the at least one second packet is transmitted on the route in a second direction, the first direction being the reverse direction to the second direction;
   - registering times for the at least two sets; and
   - calculating a capacity of the route dependent on packet size and registered times for the at least two sets.

2. The method according to claim 1 wherein the identifying and matching comprises the step of monitoring reliable packet traffic for packets that match the following criteria:

   - two packets of equal size transmitted back-to-back in the first direction on the route, and
   - response packets to those packets sent in the second direction on the route.

3. The method according to claim 1 wherein the identifying and matching comprises the step of monitoring reliable packet traffic for packets that match the following criteria:

   - (a) a first packet of the first set, the first packet having a size and either

     (i) a first packet of the second set, where the first packet of the second set is substantially double the size of the first packet of the first set, or,
     (ii) two first packets of the second set, each substantially the same size as the first packet of the first set and where the two first packets of the second set are transmitted back-to-back,

- (b) and response packets sent to those packets fulfilling criterion (a).

4. The method according to any of the previous claims in which a plurality of packets are identified and matched and for which times are registered and further wherein capacity is calculated by using the minimum difference in registered times for matched packets.

5. The method according to any previous claim wherein the reliable packet traffic is TCP traffic.

6. A network node (103) on a network configured to carry reliable packet traffic, reliable traffic being traffic in which a response packet is sent in response to at least one transmitted packet, wherein the network node (103) is located part way along a route and is configured to:

- identify and match at least two sets, the at least two sets comprising at least a first set and a second set, wherein a set comprises at least one first (101, 102) packet and at least one second packet (REP1, REP2) transmitted on the route, one packet of the set being a response packet, wherein the at least one first packet (101, 102) is transmitted in a first direction and the at least one second packet (REP1, REP2) is transmitted on the route in a second direction, the first direction being the reverse direction to the second direction; and
- register times for the at least two sets; and
- calculate a capacity of the route dependent on packet size and registered times for the at least two sets.

7. A network node according to claim 6 wherein the network node is a gateway device configured to couple the network to a further network.

8. A network node according to any of claims 6 or 7 configured to carry TCP traffic as reliable packet traffic.

9. A program to probe a route in a network configured to carry reliable packet traffic, reliable traffic being traffic in which a response packet is sent in response to at least one transmitted packet, the program configured to perform the steps of:

- identifying and matching at a network node (103) part way along the route, at least two sets, the at least two sets comprising at least a first set and a second set, wherein a set comprises at least one first (101, 102) packet and at least one second packet (REP1, REP2) transmitted on the route, one packet of the set being a response packet, wherein the at least one first packet (101, 102) is transmitted in a first direction and the at least one second packet (REP1, REP2) is transmitted on the route in a second direction, the first direction being the reverse direction to the second direction;
- registering times for the at least two sets; and
- calculating a capacity of the route dependent on packet size and registered times for the at least two sets.

10. A program according to claim 9 wherein the program is configured to recognise and handle TCP traffic as reliable packet traffic.

**Patentansprüche**

1. Verfahren zum Messen der Kapazität auf einer Strecke in einem Netz, das konfiguriert ist, um zuverlässigen Paketverkehr zu transportieren, wobei der zuverlässige Verkehr Verkehr ist, in dem ein Antwortpaket als Antwort auf mindestens ein übertragenes Paket gesendet wird, wobei das Verfahren Folgendes umfasst:

- Identifizieren und Abgleichen von mindestens zwei Sätzen an einem Netzknoten (103) an einer Stelle auf der Strecke, wobei die mindestens zwei Sätze mindestens einen ersten Satz und einen zweiten Satz umfassen, wobei ein Satz mindestens ein erstes (101, 102) Paket und mindestens ein zweites Paket (REP1, REP2), die auf der Strecke übertragen werden, umfasst, wobei ein Paket des Satzes ein Antwortpaket ist, wobei das mindestens eine erste Paket in einer ersten Richtung übertragen wird und das mindestens eine zweite Paket auf der Strecke in einer zweiten Richtung übertragen wird, wobei die erste Richtung die zur zweiten Richtung entgegengesetzte Richtung ist;
- Registrieren von Zeiten für die mindestens zwei Sätze; und
- Berechnen einer Kapazität der Strecke abhängig von der Paketgröße und den registrierten Zeiten für die mindestens zwei Sätze.

2. Verfahren nach Anspruch 1, wobei das Identifizieren und Abgleichen den Schritt des Überwachens des zuverlässigen Paketverkehrs auf Pakete umfasst, die folgende Kriterien erfüllen:

- zwei gleich große Pakete, die Back-to-Back in der ersten Richtung auf der Strecke übertragen werden, und
- Antwortpakete auf diejenigen Pakete, die in der zweiten Richtung auf der Strecke gesendet werden.

3. Verfahren nach Anspruch 1, wobei das Identifizieren und Abgleichen den Schritt des Überwachens des zuverlässigen Paketverkehrs auf Pakete umfasst, die folgende Kriterien erfüllen:

- (a) ein erstes Paket des ersten Satzes, wobei das erste Paket eine Größe aufweist und entweder

(i) ein erstes Paket des zweiten Satzes, wobei das erste Paket des zweiten Satzes im Wesentlichen doppelt so groß wie das erste Paket des ersten Satzes ist, oder
(ii) zwei erste Pakete des zweiten Satzes, je mit im Wesentlichen der gleichen Größe wie das erste Paket des ersten Satzes, und wobei die zwei ersten Pakete des zweiten Satzes Back-to-Back übertragen werden,

- (b) und Antwortpakete, die an diejenigen Pakete, die das Kriterium (a) erfüllen, gesendet werden.

4. Verfahren nach einem der vorhergehenden Ansprüche, bei dem eine Vielzahl von Paketen identifiziert und abgeglichen wird und für das Zeiten registriert werden, und wobei ferner die Kapazität durch Nutzung der Mindestdifferenz der registrierten Zeiten für abgeglichene Pakete berechnet wird.

5. Verfahren nach einem vorhergehenden Anspruch, wobei der zuverlässige Paketverkehr TCP-Verkehr ist.

6. Netzknoten (103) in einem Netz, das konfiguriert ist, um zuverlässigen Paketverkehr zu transportieren, wobei der zuverlässige Verkehr Verkehr ist, in dem ein Antwortpaket als Antwort auf mindestens ein übertragenes Paket gesendet wird, wobei sich der Netzknoten (103) an einer Stelle auf einer Strecke befindet und konfiguriert ist, um:

- mindestens zwei Sätze zu identifizieren und abzugleichen, wobei die mindestens zwei Sätze mindestens einen ersten Satz und einen zweiten Satz umfassen, wobei ein Satz mindestens ein erstes (101, 102) Paket und mindestens ein zweites Paket (REP1, REP2), die auf der Strecke übertragen werden, umfasst, wobei ein Paket des Satzes ein Antwortpaket ist, wobei das mindestens eine erste Paket (101, 102) in einer ersten Richtung übertragen wird und das mindestens eine zweite Paket (REP1, REP2) auf der Strecke in einer zweiten Richtung übertragen wird, wobei die erste Richtung die zur zweiten Richtung entgegengesetzte Richtung ist;
- Zeiten für die mindestens zwei Sätze zu registrieren; und
- eine Kapazität der Strecke abhängig von der Paketgröße und den registrierten Zeiten für die mindestens zwei Sätze zu berechnen.

7. Netzknoten nach Anspruch 6, wobei der Netzknoten ein Gateway-Gerät ist, das konfiguriert ist, um das Netz an ein weiteres Netz zu koppeln.

8. Netzknoten nach Anspruch 6 oder 7, der konfiguriert ist, um TCP-Verkehr als zuverlässigen Paketverkehr zu transportieren.

9. Programm zum Prüfen einer Strecke in einem Netz, das konfiguriert ist, um zuverlässigen Paketverkehr zu transportieren, wobei der zuverlässige Verkehr Verkehr ist, in dem ein Antwortpaket als Antwort auf mindestens ein übertragenes Paket gesendet wird, wobei das Programm konfiguriert ist, um folgende Schritte durchzuführen:

- Identifizieren und Abgleichen von mindestens zwei Sätzen an einem Netzknoten (103) an einer Stelle auf der Strecke, wobei die mindestens zwei Sätze mindestens einen ersten Satz und einen zweiten Satz umfassen, wobei ein Satz mindestens ein erstes (101, 102) Paket und mindestens ein zweites Paket (REP1, REP2), die auf der Strecke übertragen werden, umfasst, wobei ein Paket des Satzes ein Antwortpaket ist, wobei das mindestens eine erste Paket (101, 102) in einer ersten Richtung übertragen wird und das mindestens eine zweite Paket (REP1, REP2) auf der Strecke in einer zweiten Richtung übertragen wird, wobei die erste Richtung die zur zweiten Richtung entgegengesetzte Richtung ist;
- Registrieren von Zeiten für die mindestens zwei Sätze; und
- Berechnen einer Kapazität der Strecke abhängig von der Paketgröße und den registrierten Zeiten für die mindestens zwei Sätze.

10. Programm nach Anspruch 9, wobei das Programm konfiguriert ist, um TCP-Verkehr als zuverlässigen Paketverkehr zu erkennen und abzuwickeln.

**Revendications**

1. Procédé de mesure de la capacité sur un itinéraire dans un réseau configuré pour acheminer un trafic de paquets fiable, le trafic de paquets fiable étant du trafic dans lequel un paquet de réponse est envoyé en réponse à au moins un paquet transmis, le procédé comprenant les étapes suivantes :

identifier et faire correspondre, au niveau d'un noeud de réseau (103) situé en chemin le long de l'itinéraire, au moins deux ensembles, les au moins deux ensembles comprenant au moins un premier ensemble et un second ensemble, où un ensemble comprend au moins un premier (101,102) paquet et au moins un second paquet (REP1, REP2) transmis sur l'itinéraire, un paquet de l'ensemble étant un paquet de réponse, où l'au moins un premier paquet est transmis dans une première direction et l'au moins un second paquet est transmis sur l'itinéraire dans une seconde direction, la première direction étant la direction inverse de la seconde direction ;

enregistrer des temps pour les au moins deux ensembles ; et

calculer une capacité de l'itinéraire en fonction de la taille du paquet et des temps enregistrés pour les au moins deux ensembles.

2. Procédé selon la revendication 1, dans lequel l'identification et la mise en correspondance comprennent l'étape comprenant de surveiller un trafic de paquets fiable pour des paquets qui satisfont aux critères suivants :

deux paquets de taille égale transmis dos à dos dans la première direction sur l'itinéraire, et des paquets de réponse aux paquets envoyés dans la seconde direction sur l'itinéraire.

3. Procédé selon la revendication 1, dans lequel l'identification et la mise en correspondance comprennent l'étape comprenant de surveiller un trafic de paquets fiable pour des paquets qui satisfont aux critères suivants :

(a) un premier paquet du premier ensemble, le premier paquet ayant une certaine taille et soit :

(i) un premier paquet du second ensemble, où le premier paquet du second ensemble est sensiblement deux fois plus grand que le premier paquet du premier ensemble, soit (ii) deux premiers paquets du second ensemble, chacun ayant sensiblement la même taille que le premier paquet du premier ensemble et où les deux premiers paquets du second ensemble sont transmis dos à dos,

(b) et des paquets de réponse envoyés aux paquets satisfaisant au critère (a).

4. Procédé selon l'une quelconque des revendications précédentes, dans lequel une pluralité de paquets sont identifiés et mis en correspondance, et pour lesquels des temps sont enregistrés, et, en outre, où une capacité est calculée en utilisant la différence minimale dans les temps enregistrés pour les paquets mis en correspondance.

5. Procédé selon l'une quelconque des revendications précédentes, dans lequel le trafic de paquets fiable est un trafic TCP.

6. Noeud de réseau (103) sur un réseau configuré pour acheminer un trafic de paquets fiable, le trafic fiable étant un trafic dans lequel un paquet de réponse est envoyé en réponse à au moins un paquet transmis, où le noeud de réseau (103) est situé en chemin le long d'un itinéraire et est configuré pour :

identifier et faire correspondre au moins deux ensembles, les au moins deux ensembles comprenant au moins un premier ensemble et un second ensemble, où un ensemble comprend au moins un premier (101, 102) paquet et au moins un second paquet (REP1, REP2) transmis sur l'itinéraire, un paquet de l'ensemble étant un paquet de réponse, où l'au moins un premier paquet (101, 102) est transmis dans une première direction et l'au moins un second paquet (REP1, REP2) est transmis sur l'itinéraire dans une seconde direction, la première direction étant la direction inverse de la seconde direction ; et

enregistrer des temps pour les au moins deux ensembles ; et

calculer une capacité de l'itinéraire en fonction de la taille du paquet et des temps enregistrés pour les au moins deux ensembles.

7. Noeud de réseau selon la revendication 6, dans lequel le noeud de réseau est un dispositif de passerelle configuré pour coupler le réseau à un autre réseau.

8. Noeud de réseau selon l'une quelconque des revendications 6 ou 7, configuré pour acheminer un trafic TCP sous la forme d'un trafic de paquets fiable.

9. Programme pour sonder un itinéraire dans un réseau configuré pour acheminer un trafic de paquets fiable, le trafic fiable étant un trafic dans lequel un paquet de réponse est envoyé en réponse à au moins un paquet transmis, le programme étant configuré pour exécuter les étapes suivantes :

identifier et faire correspondre, au niveau d'un noeud de réseau (103) situé en chemin le long de l'itinéraire, au moins deux ensembles, les au moins deux ensembles comprenant au moins un premier ensemble et un second ensemble, où un ensemble comprend au moins un premier (101,102) paquet et au moins un second paquet (REP1, REP2) transmis sur l'itinéraire, un paquet de l'ensemble étant un paquet de réponse, où l'au moins un premier paquet (101, 102) est transmis dans une première direction et l'au moins un second paquet (REP1, REP2) est transmis sur l'itinéraire dans une seconde direction, la première direction étant la direction inverse de la seconde direction ;

enregistrer des temps pour les au moins deux ensembles ; et

calculer une capacité de l'itinéraire en fonction de la taille du paquet et des temps enregistrés pour les au moins deux ensembles.

10. Programme selon la revendication 9, dans lequel le programme est configuré pour reconnaître et gérer du trafic TCP sous la forme d'un trafic de paquets fiable.

101 — PK 1
102 — PK 2

103    104    105

PK 1
PK 2

PK 1

PK 2

REP 1

REP 2

REP 1

REP 2

RTT 2    RTT 1

Fig. 1

EP 3 100 413 B1

203    204    205

201

202

206

Fig. 2

EP 3 100 413 B1

Fig. 3

Fig. 4

Fig. 5

EP 3 100 413 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2276202 A

**Non-patent literature cited in the description**

- End-to-end available bandwidth probing in heterogeneous IP home networks. **A. DELPHINANTO ; T. KOONEN ; F. DEN HARTOG ; DELPHINANTO, A. ; KOONEN, T. ; DEN HARTOG, F.** Consumer Communications and Networking Conference (CCNC). IEEE, 2011, 431-435
- Real-time probing of available bandwidth in home networks. **A. DELPHINANTO ; T. KOONEN ; F. DEN HARTOG.** Communications Magazine. IEEE, June 2011, vol. 49, 134-140
- **CESAR MARCONDES.** TCP Probe: A TCP with built-in Path Capacity Estimation. *The 8th IEEE Global Internet Symposium,* April 2005
- Exploring Embedded Path Capacity Estimation in TCP Receiver. **CESAR MARCONDES et al.** END-TO-END MONITORING TECHNIQUES AND SERVICES, 2007. E2EMON '07. WORKSHOP ON. IEEE, 30 May 2007